# EUROPEAN PATENT SPECIFICATION

(11) **EP 3 104 485 B1**
(45) Date of publication and mention of the grant of the patent: **22.09.2021**
(21) Application number: 15171164.5
(22) Date of filing: 09.06.2015
(51) Int. Cl.: H02J 1/10

(54) **POWER PROVIDING APPARATUS FOR USE WITH MULTIPLE ELECTRICITY SOURCES**
STROMBEREITSTELLUNGSVORRICHTUNG ZUR VERWENDUNG MIT MEHREREN ELEKTRIZITÄTSQUELLEN
APPAREIL DE FOURNITURE DE PUISSANCE DESTINÉ À ÊTRE UTILISÉ AVEC DE MULTIPLES SOURCES D'ÉLECTRICITÉ

(43) Date of publication of application: 14.12.2016
(73) Proprietor: CSI Technology Co., Ltd., Taichung City 407 (TW)
(72) Inventor: Liao, Chen-Sung, 411 Taichung City (TW)
(74) Representative: V.O.

(56) References cited:
- EP-A1- 2 365 598
- WO-A1-2007/004514
- WO-A2-2013/060604
- US-A- 5 583 753
- US-A1- 2013 229 060
- US-A1- 2014 062 205

## Description

The present invention relates to a power providing apparatus configured for use with at least a first electricity source and a second electricity source.

Due to environmental protection and energy consumption issues, solar power is being developed and becoming more popular. Conventionally, solar panels are used for collecting light, and convert light energy into electrical energy by photovoltaic effect.

However, the amount of electrical energy converted varies with light intensity. When the light intensity is low, an output power of the solar panels will drop, causing an unstable supply of electrical power to an electrical appliance electrically connected to the solar panels.

US5, 583, 753 discloses a parallel control type DC-DC converter that supplies an output voltage to a load based on voltages supplied from independent power sources. The DC-DC converter is provided with at least first and second converters powered by the independent power sources and commonly grounded and including a switching element, a control circuit driving the switching elements within the first and second converters by ON-pulses having the same width depending the output voltage, and a circuit coupling outputs of the first and second converters in parallel and producing the output voltage.

The object of the present invention is to provide a power providing apparatus that can be used with different electricity sources to provide stable electrical power to a load.

The present invention is defined by the features of claim 1.

According to the present invention, there is provided a power providing apparatus configured for use with a first electricity source and a second electricity source, and configured to provide electric power to a load. The power providing apparatus comprises a first D.C. input port for electrical connection to the first electricity source, a second D.C. input port for electrical connection to the second electricity source, a D.C. output port for electrical connection to the load, a first current control component having an input terminal coupled electrically to the first input port via a first voltage adjusting unit, and an output terminal coupled electrically to the D.C. output port, and a second current control component having an input terminal coupled electrically to the second input port via a second voltage output adjusting unit, and an output terminal coupled electrically to the D.C. output port, wherein the first and second current control components are coupled in parallel to the D.C. output port.

When a voltage inputted to the first current control component and associated with the first electricity source is greater than a voltage inputted to the second current control component and associated with the second electricity source by a predetermined difference, the second current control component breaks a current path from the second D.C. input port to the D.C. output port, and the first current control component makes a current path from the first D.C. input port to the D.C. output port.

When absolute value of a difference between the voltage inputted to the first current control component and associated with the first electricity source and the voltage inputted to the second current control component and associated with the second electricity source is less than the predetermined difference, the second current control component makes the current path from the second D.C. input port to the D.C. output port, and the first current control component makes the current path from the first D.C. input port to the D.C. output port.

When the voltage inputted to the second current control component and associated with the second electricity source is greater than the voltage inputted to the first current control component and associated with the first electricity source by the predetermined difference, the second current control component makes the current path from the second D.C. input port to the D.C. output port, and the first current control component breaks the current path from the first D.C. input port to the D.C. output port.

The first voltage adjusting unit has a working state, in which it outputs a voltage that is in the range of an operating voltage of the load, and a non-working state, in which it outputs a voltage that varies with its input voltage, wherein a first priority setting unit is configured to control the first voltage adjusting unit to switch between the working state and the non-working state.

The second voltage adjusting unit has a working state, in which it outputs a voltage that is in the range of an operating voltage of the load, and a non-working state, in which it outputs a voltage that varies with its input voltage, wherein a second priority setting unit is configured to control the second voltage adjusting unit to switch between the working state and the non-working state.

Other features and advantages of the present invention will become apparent in the following detailed description of the preferred embodiment with reference to the accompanying drawings, of which:
Figure 1 is a schematic diagram of an implementation of a preferred embodiment of a power providing apparatus of the present invention;
Figure 2 is a graph illustrating voltage and current relationship in a circuit simulation of the preferred embodiment of the power providing apparatus when used with an electricity generator powered by solar energy and a power converter powered by commercial alternating current power;
Figure 3 is a graph illustrating changes in voltage and current, based on an experiment with the preferred embodiment of the power providing apparatus under various lighting conditions; and
Figure 4 is a schematic diagram of another implementation of another mode of the preferred embodiment of the power providing apparatus of the present invention.

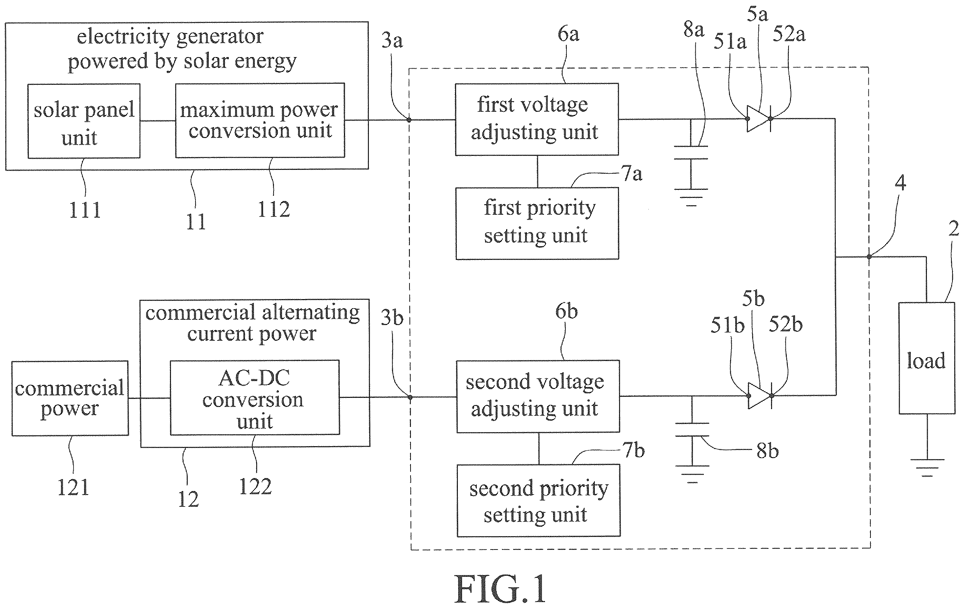

Referring to Figure 1, discloses a preferred embodiment of a power providing apparatus according to this invention is configured for use with an electricity generator 11 powered by solar energy (a first electricity source) and a power converter 12 powered by commercial alternating current power (a second electricity source), and is configured to provide electric power to a load 2. The power providing apparatus includes a first input port 3a, a second input port 3b, an output port 4, a first current control component 5a, a second current control component 5b, a first voltage adjusting unit 6a, a second voltage adjusting unit 6b, a first priority setting unit 7a, a second priority setting unit 7b, a first storage unit 8a, and a second storage unit 8b.

The first input port 3a and the second input port 3b are electrically connected to the electricity generator 11 and the power converter 12, respectively. The output port 4 is adapted to be electrically connected to the load 2. The electricity generator 11 includes a solar panel unit 111 and a maximum power conversion unit 112. The power converter 12 includes an alternating current-direct current (AC-DC) conversion unit 122 that receives the commercial power 121.

The first current control component 5a has an input terminal 51a coupled electrically to the first input port 3a, and an output terminal 52a coupled electrically to the output port 4. The second current control component 5b has an input terminal 51b coupled electrically to the second input port 3b, and an output terminal 52b coupled electrically to the output port 4. In this embodiment, the first current control component 5a and the second current control component 5b are diodes, and the input terminal and the output terminal of each diode is an anode and a cathode, respectively. In other embodiments, each of the first current control component 5a and the second current control component 5b is a thyristor. As an example, each of the first current control component 5a and the second current control component 5b may be a silicon controlled rectifier. In another example, each of the first current control component 5a and the second current control component 5b is a triode for alternating current (TRIAC) .

The first voltage adjusting unit 6a couples electrically the first input port 3a to the input terminal 51a of the first current control component 51a, and the second voltage adjusting unit 6b couples electrically the second input port 3b to the input terminal 51b of the second current control component 52b. The first voltage adjusting unit 6a and the second voltage adjusting unit 6b can be switched between a working state and a non-working state. For instance, in the working state, the first voltage adjusting unit 6a outputs a voltage that is in the range of an operating voltage of the load 2. In the non-working state, the voltage outputted by the first voltage adjusting unit 6a varies with an input voltage received by the first voltage adjusting unit 6a.

The first priority setting unit 7a is coupled electrically to the first voltage adjusting unit 6a and is configured to control the first voltage adjusting unit 6a to switch between the working state and the non-working state. While in the working state, the first priority setting unit 7a controls the first voltage adjusting unit 6a to output a voltage to the input terminal 51a of the first current control component 5a that corresponds to a priority assigned to the electricity generator 11. Similarly, the second priority setting unit 7b is coupled electrically to the second voltage adjusting unit 6b and is configured to control the second voltage adjusting unit 6b to switch between the working state and the non-working state. While in the working state, the second priority setting unit 7b controls the second voltage adjusting unit 6b to output a voltage to the input terminal 51b of the second current control component 5b that corresponds to a priority assigned to the power converter 12.

The first storage unit 8a is coupled to the input terminal 51a of the first current control component 51a. The second storage unit 8b is coupled to the input terminal 51b of the second current control component 51b. In this embodiment, each of the first and the second storage units 8a, 8b is a capacitor.

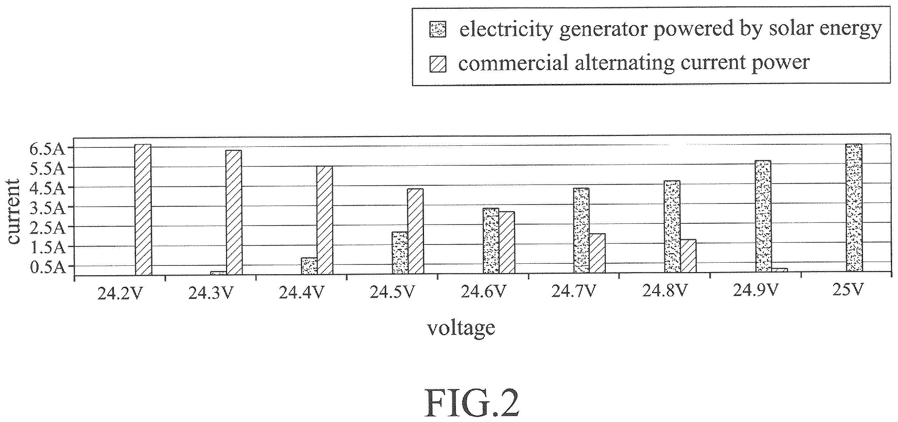

Referring to Figure 2, in the use state of the power providing apparatus, the first priority setting unit 7a switches the first voltage adjusting unit 6a electrically connected with the electricity generator 11 to be in a non-working state, and the second priority setting unit 7b switches the second voltage adjusting unit 6b electrically connected with the power converter 12 to be in a working state, such that the second voltage adjusting unit 6b outputs a voltage that is lower than a peak voltage of a voltage outputted by the first voltage adjusting unit 6a and that is in the range of the operating voltage of the load 2. In a circuit simulation of this preferred embodiment, the voltage outputted by the second voltage adjusting unit 6b is 24.6V.

When a voltage inputted to the first current control component 5a and associated with the first electricity source 11 (the electricity generator) is greater than a voltage inputted to the second current control component 5b and associated with the second electricity source 12 (the power converter) by a predetermined difference (in this embodiment, the predetermined difference is 0.4V), the first current control component 5a is forward biased with a voltage across the input terminal 51a and the output terminal 52a of the first current control component 5a that is greater than a threshold voltage, i.e. the PN junction voltage, and thus the first current control component 5a makes a current path from the first input port 3a to the output port 4. On the other hand, a voltage across the input terminal 51b and the output terminal 52b of the second current control component 5b is smaller than a threshold voltage of the second current control component 5b, and thus the second current control component 5b breaks a current path from the second input port 3b to the output port 4.

Due to changes in light received by the electricity generator 11, the voltage inputted to the first current control component 5a by the electricity generator 11 starts to decrease. When absolute value of a difference between the voltage inputted to the first current control component 5a and associated with the first electricity source 11 (the electricity generator) and the voltage inputted to the second current control component 5b and associated with the second electricity source 12 (the power converter) is less than the predetermined difference, the first current control component 5a maintains the current path from the first input port 3a to the output port 4, with the first electricity source 11 supplying a smaller amount of current to the output port 4 than before. At the same time, the voltage across the input terminal 51b and the output terminal 52b of the second current control component 5b becomes greater than the threshold voltage of the second current control component 5b, and thus the second current control component 5b makes a current path from the second input port 3b to the output port 4. As a result, both the first electricity source 11 and the second electricity source 12 supply current to the load 2. The second electricity source 12 supplies the current that supplements the drop in the current supplied by the first electricity source 11, such that power received by the load 2 is sufficient.

When the light received by the electricity generator 11 is further decreased, the voltage inputted to the second current control component 5b and associated with the second electricity source 12 (the power converter) becomes greater than the voltage inputted to the first current control component 51a and associated with the first electricity source 11 (the electricity generator) by the predetermined difference, the second current control component 5b maintains the current path from the second input port 3b to the output port 4. At the same time, the voltage across the input terminal 51a and the output terminal 52a of the first current control component 5a becomes smaller than the threshold voltage of the first current control component 5a, and thus the first current control component 51a breaks the current path from the first input port 3a to the output port 4.

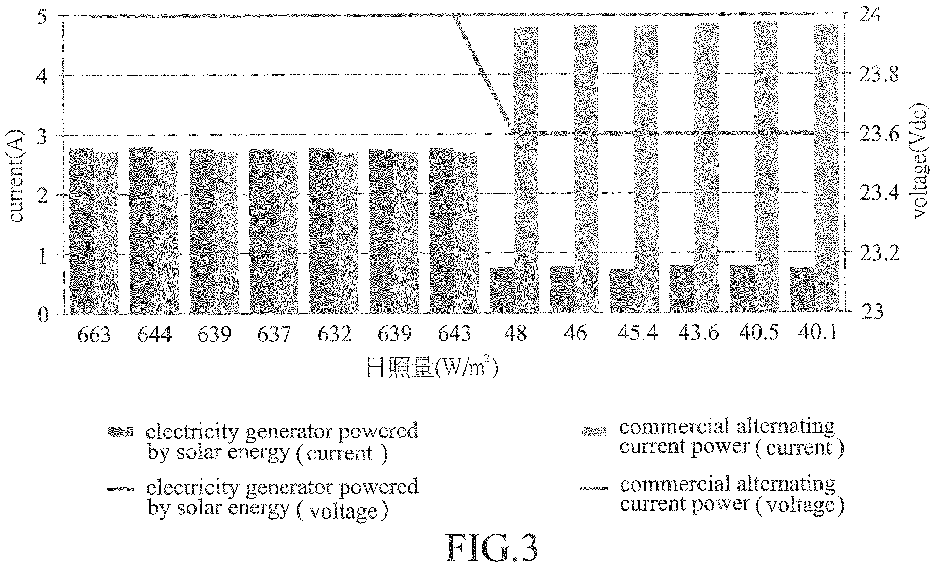

Figure 3 shows a graph of electricity supplied by the power providing apparatus under different lighting conditions in an actual experiment. The operating voltage and the consumption power of the load 2 are 24V and 130W, respectively, and thus the second voltage adjusting unit 6b is adjusted to be 24V.

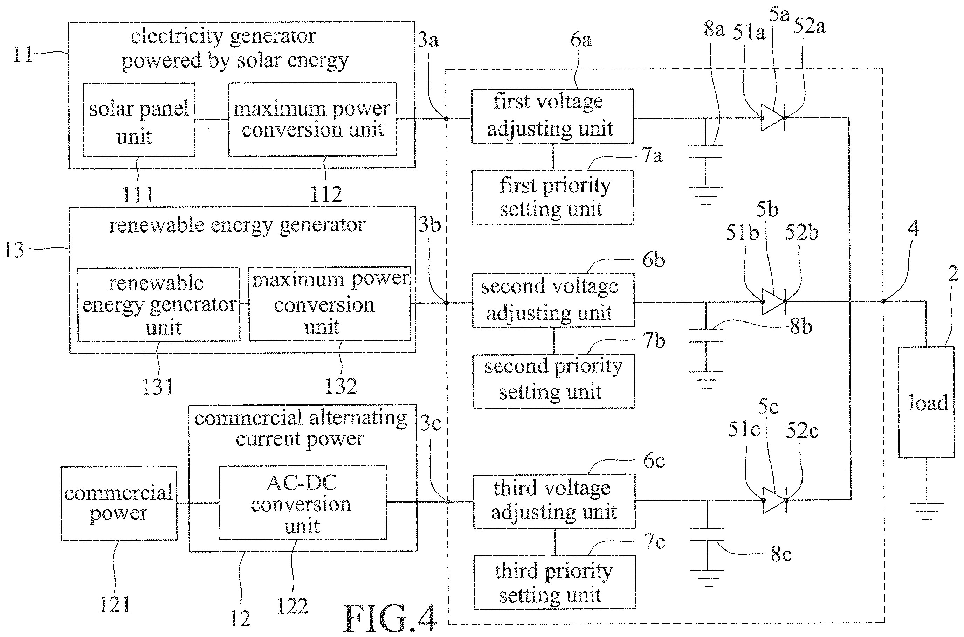

Referring to Figure 4, the power providing apparatus of this invention can be further configured for use with a renewable power generator 13 (second electricity source), such as a wind power generator, a geothermal power generator, a tidal power generator, abiofuelpower generator, etc. The power providing apparatus is capable of regulating the supply of power from the electricity generator 11 powered by solar energy (first electricity source), the power converter 12 powered by commercial alternating current power (third electricity source), and the renewable power generator 13. The power providing apparatus further includes a third input port 3c for electrical connection to the third electricity source, a third current control component 5c having an input terminal 51c coupled electrically to the third input port 3c, and an output terminal 52c coupled electrically to the output port 4, a third voltage adjusting unit 6c that couples electrically the third input port 3c to the input terminal 51c of the third current control component 5c, a third priority setting unit 7c coupled electrically to the third voltage adjusting unit and configured to control the third voltage adjusting unit 6c so as to output a voltage to the input terminal 51c of the third current control component 5c that corresponds to a priority assigned to the third electricity source, and a third storage unit 8c electrically connected with the input terminal 51c of the third current control component 5c.

The renewable power generator 13 includes an electricity generator unit 131 powered by a sustainable energy source, and a maximum power conversion unit 132.

In the use state of the power providing apparatus, the first priority setting unit 7a switches the first voltage adjusting unit 6a electrically connected with the electricity generator 11 to be in a non-working state, the third priority setting unit 7c switches the third voltage adjusting unit 6c electrically connected with the power converter 12 to a working state, and the second priority setting unit 7b switches the second voltage adjusting unit 6b to a working state, and a voltage inputted to the second current control component 5b and associated with the renewable power generator 13 is greater than a voltage inputted to the third current control component 5c and associated with the power converter 12.

When a voltage inputted to the first current control component 5a and associated with the electricity generator 11 is greater than a voltage inputted to the second current control component 5b and associated with the renewable power generator 13 by a first predetermined difference, and is greater than a voltage inputted to the third current control component 5c and associated with the power converter 12 by a second predetermined difference, the second current control component 5b breaks a current path from the second input port 3b to the output port 4, the third current control component 5c breaks a current path from the third input port 3c to the output port 4, and the first current control component 5a makes a current path from the first input port 3a to the output port 4.

When absolute value of a difference between the voltage inputted to the first current control component 5a and associated with the electricity generator 11 and the voltage inputted to the second current control component 5b and associated with the renewable power generator 13 is less than the first predetermined difference, and the voltage inputted to the first current control component 5a and associated with the electricity generator 11 is greater than the voltage inputted to the third current control component 5c and associated with the power converter 12 by the second predetermined difference, the second current control component 5b makes the current path from the second input port 3b to the output port 4, the third current control component 5c breaks the current path from the third input port 3c to the output port 4, and the first current control component 5a makes the current path from the first input port 3a to the output port 4.

When the voltage inputted to the second current control component 5b and associated with the renewable power generator 13 is greater than the voltage inputted to the first current control component 5a and associated with the electricity generator 11 by the first predetermined difference, and the voltage inputted to the second current control component 5b and associated with the renewable power generator 13 is greater than the voltage inputted to the third current control component 5c and associated with the power converter 12 by the second predetermined difference, the second current control component 5b makes the current path from the second input port 3b to the output port 4, the third current control component 5c breaks the current path from the third input port 3c to the output port 4, and the first current control component 5a breaks the current path from the first input port 3a to the output port 4.

When the voltage inputted to the second current control component 5b and associated with the renewable power generator 13 is greater than the voltage inputted to the first current control component 5a and associated with the electricity generator 11 by the first predetermined difference, and absolute value of a difference between the voltage inputted to the second current control component 5b and associated with the renewable power generator 13 and the voltage inputted to the third current control component 5c and associated with the power converter 12 is less than the second predetermined difference, the second current control component 5b makes the current path from the second input port 3b to the output port 4, the third current control component 5c makes the current path from the third input port 3c to the output port 4, and the first current control component 5a breaks the current path from the first input port 5a to the output port 4.

When the voltage inputted to the third current control component 5c and associated with the power converter 12 is greater than the voltage inputted to the first current control component 5a and associated with the electricity generator 11 by the first predetermined difference, and is greater than the voltage inputted to the second current control component 5b and associated with the renewable power generator 13 by the second predetermined difference, the second current control component 5b breaks the current path from the second input port 3b to the output port 4, the third current control component 5c makes the current path from the third input port 3c to the output port 4, and the first current control component 5a breaks the current path from the first input port 3a to the output port 4.

In summary, the power providing apparatus of this invention automatically regulates the voltages outputted by the voltage adjusting units 6a, 6b, 6c through the priority setting units 7a, 7b, 7c. Moreover, with the current control components 5a, 5b, 5c, the power providing apparatus is able to prioritize the electricity generator 11 to provide power to the load 2. When the electricity generator 11 powered by solar energy has insufficient power, other power sources, according to an order of priority, are able to provide power to the load 2. When power of the electricity generator 11 is sufficient, the electricity generator 11 will once again provide power to the load 2. Therefore, without requiring an additional voltage or current detector for monitoring a power status of the electricity generator 11, the electricity generator 11 can be prioritized over other energy sources in supplying power. Since the power providing apparatus has a simple circuit design, additional energy sources can be electrically connected in parallel by adding additional current control components, voltage adjusting units, priority setting units, and storage units. Moreover, according to implementation cost of different energy sources, the priority setting units are able to prioritize energy sources in supplying electricity to the load, such that operating costs can be minimized.

While the present invention has been described in connection with what is considered the most practical and preferred embodiment, it is understood that this invention is not limited to the disclosed embodiment but is intended to cover various arrangements included within the scope of the claims.

## Claims

1. A power providing apparatus configured for use with a first electricity source and a second electricity source, and configured to provide electric power to a load (2), the power providing apparatus including:
a first D.C. input port (3a) for electrical connection to the first electricity source;
a second D.C. input port (3b) for electrical connection to the second electricity source;
a D.C. output port (4) for electrical connection to the load (2);
a first current control component (5a) having an input terminal (51a) coupled electrically to the first input port (3a) via a first voltage adjusting unit (6a), and an output terminal (52a) coupled electrically to the D.C. output port (4); and
a second current control component (5b) having an input terminal (51b) coupled electrically to the second input port (3b) via a second voltage output adjusting unit (6b), and an output terminal (52b) coupled electrically to the D.C. output port (4);
wherein:
when a voltage inputted to the first current control component (5a) and associated with the first electricity source is greater than a voltage inputted to the second current control component (5b) and associated with the second electricity source by a predetermined difference, the second current control component (5b) breaks a current path from the second D.C. input port (3b) to the D.C. output port (4), and the first current control component (5a) makes a current path from the first D.C. input port (3a) to the D.C. output port (4);
when absolute value of a difference between the voltage inputted to the first current control component (5a) and associated with the first electricity source and the voltage inputted to the second current control component (5b) and associated with the second electricity source is less than the predetermined difference, the second current control component (5b) makes the current path from the second D.C. input port (3b) to the D.C. output port (4), and the first current control component (5a) makes the current path from the first D.C. input port (3a) to the D.C. output port (4); and
when the voltage inputted to the second current control component (5b) and associated with the second electricity source is greater than the voltage inputted to the first current control component (5a) and associated with the first electricity source by the predetermined difference, the second current control component (5b) makes the current path from the second D.C. input port (3b) to the D.C. output port (4), and the first current control component (5a) breaks the current path from the first D.C. input port (3a) to the D.C. output port (4);
the power providing apparatus being **characterized in that**
the first voltage adjusting unit (6a) has a working state, in which it outputs a voltage that is in the range of an operating voltage of the load (2), and a non-working state, in which it outputs a voltage that varies with its input voltage, wherein a first priority setting unit (7a) is configured to control the first voltage adjusting unit (6a) to switch between the working state and the non-working state;
wherein the second voltage adjusting unit (6b) has a working state, in which it outputs a voltage that is in the range of an operating voltage of the load (2), and a non-working state, in which it outputs a voltage that varies with its input voltage, wherein a second priority setting unit (7b) is configured to control the second voltage adjusting unit (6b) to switch between the working state and the non-working state.

2. The power providing apparatus as claimed in claim 1, **characterized in that** each of the first current control component (5a) and the second current control component (5b) is a diode.

3. The power providing apparatus as claimed in claim 1, **characterized in that** each of the first current control component (5a) and the second current control component (5b) is a thyristor.

4. The power providing apparatus as claimed in claim 3, **characterized in that** the thyristor is a silicon controlled rectifier.

5. The power providing apparatus as claimed in claim 3, **characterized in that** the thyristor is a triac.

6. The power providing apparatus as claimed in any one of claims 1 to 5, **characterized in that** the first electricity source has a higher priority than the second electricity source, and the second priority setting unit (7b) is configured to control the second voltage adjusting unit (6b) so that the voltage outputted by the second voltage adjusting unit (6b) is lower than a peak voltage of the voltage outputted by the first voltage adjusting unit (6a).

7. The power providing apparatus as claimed in claim 6, **characterized in that** the first electricity source is an electricity generator (11) powered by solar energy, and the second electricity source is a power converter (12) powered by commercial alternating current power.

8. The power providing apparatus as claimed in any one of claims 1 to 7, further **characterized by** at least one storage unit (8a, 8b), each coupled to the input terminal (51a, 51b) of a corresponding one of the first current control component (5a) and the second current control component (5b).

9. The power providing apparatus as claimed in claim 8, **characterized in that** the storage unit (8a, 8b) is a capacitor.

10. A power providing apparatus according to any of the preceding claims, wherein the power providing apparatus is configured for use with the first electricity source, the second electricity source and a third electricity source, the power providing apparatus including:
a third D.C. input port (3c) for electrical connection to the third electricity source;
a third current control component (5c) having an input terminal (51c) coupled electrically to the third D.C. input port (3c) via a third voltage adjusting unit (6c), and an output terminal (52c) coupled electrically to the D.C. output port (4);
wherein the third voltage adjusting unit (6c) has a working state, in which it outputs a voltage that is in the range of an operating voltage of the load (2), and a non-working state, in which it outputs a voltage that varies with its input voltage, wherein a third priority setting unit (7c) is configured to control the third voltage adjusting unit (6c) to switch between the working state and the non-working state, wherein the first, second and third current control components (5a,5b,5c) are coupled in parallel to the D.C. output port (4);
wherein:
when a voltage inputted to the first current control component (5a) and associated with the first electricity source is greater than a voltage inputted to the second current control component (5b) and associated with the second electricity source by a first predetermined difference, and is greater than a voltage inputted to the third current control component (5c) and associated with the third electricity source by a second predetermined difference, the second current control component (5b) breaks a current path from the second D.C. input port (3b) to the D.C. output port (4), the third current control component (5c) breaks a current path from the third D.C. input port (3c) to the D.C. output port (4), and the first current control component (5a) makes a current path from the first D.C. input port (3a) to the D.C. output port (4);
when absolute value of a difference between the voltage inputted to the first current control component (5a) and associated with the first electricity source and the voltage inputted to the second current control component (5b) and associated with the second electricity source is less than the first predetermined difference, and the voltage inputted to the first current control component (5a) and associated with the first electricity source is greater than the voltage inputted to the third current control component (5c) and associated with the third electricity source by the second predetermined difference, the second current control component (5b) makes the current path from the second D.C. input port (3b) to the D.C. output port (4), the third current control component (5c) breaks the current path from the third D.C. input port (3c) to the D.C. output port (4), and the first current control component (5a) makes the current path from the first D.C. input port (3a) to the D.C. output port (4);
when the voltage inputted to the second current control component (5b) and associated with the second electricity source is greater than the voltage inputted to the first current control component (5a) and associated with the first electricity source by the first predetermined difference, and the voltage inputted to the second current control component (5b) and associated with the second electricity source is greater than the voltage inputted to the third current control component (5c) and associated with the third electricity source by the second predetermined difference, the second current control component (5b) makes the current path from the second D.C. input port (3b) to the D.C. output port (4), the third current control component (5c) breaks the current path from the third D.C. input port (3c) to the D.C. output port (4), and the first current control component (5a) breaks the current path from the first D.C. input port (3a) to the D.C. output port (4);
when the voltage inputted to the second current control component (5b) and associated with the second electricity source is greater than the voltage inputted to the first current control component (5a) and associated with the first electricity source by the first predetermined difference, and absolute value of a difference between the voltage inputted to the second current control component (5b) and associated with the second electricity source and the voltage inputted to the third current control component (5c) and associated with the third electricity source is less than the second predetermined difference, the second current control component (5b) makes the current path from the second D.C. input port (3b) to the D.C. output port (4), the third current control component (5c) makes the current path from the third D.C. input port (3c) to the D.C. output port (4), and the first current control component (5a) breaks the current path from the first D.C. input port (3a) to the D.C. output port (4); and
when the voltage inputted to the third current control component (5c) and associated with the third electricity source is greater than the voltage inputted to the first current control component (5a) and associated with the first electricity source by the first predetermined difference, and is greater than the voltage inputted to the second current control component (5b) and associated with the second electricity source by the second predetermined difference, the second current control component (5b) breaks the current path from the second D.C. input port (3b) to the D.C. output port (4), the third current control component (5c) makes the current path from the third D.C. input port (3c) to the D.C. output port (4), and the first current control component (5a) breaks the current path from the first D.C. input port (3a) to the D.C. output port (4).

11. The power providing apparatus as claimed in claim 10, **characterized in that** the first electricity source has a higher priority than the second electricity source, the second electricity source has a higher priority than the third electricity source, the third priority setting unit (7c) is configured to control the third voltage adjusting unit (6c) so that the voltage outputted by the third voltage adjusting unit (6c) is lower than a peak voltage of the voltage outputted by the second voltage adjusting unit (6b), and the second priority setting unit (7b) is configured to control the second voltage adjusting unit (6b) so that the voltage outputted by the second voltage adjusting unit (6b) is lower than a peak voltage of the voltage outputted by the first voltage adjusting unit (6a).

12. The power providing apparatus as claimed in claim 11, **characterized in that**:
the first electricity source is an electricity generator (11) powered by solar energy;
the second electricity source is an electricity generator (11) powered by a sustainable energy source selected from wind energy, geothermal energy, tidal energy, and biofuel; and
the third electricity source is a power converter (12) powered by commercial alternating current power.

## Patentansprüche

1. Stromversorgungsvorrichtung, die zur Verwendung mit einer ersten Stromquelle und einer zweiten Stromquelle ausgelegt ist, und die so ausgelegt ist, dass sie eine Last (2) mit elektrischer Energie versorgt, wobei die Stromversorgungsvorrichtung einschließt:
einen ersten Gleichstrom-Eingangsanschluss (3a) zum elektrischen Anschluss an die erste Stromquelle;
einen zweiten Gleichstrom-Eingangsanschluss (3b) zum elektrischen Anschluss an die zweite Stromquelle;
einen Gleichstrom-Ausgangsanschluss (4) zum elektrischen Anschluss an die Last (2);
eine erste Stromsteuerkomponente (5a) mit einer Eingangsklemme (51a), die über eine erste Spannungseinstelleinheit (6a) elektrisch mit dem ersten Eingangsanschluss (3a) gekoppelt ist, und einer Ausgangsklemme (52a), die elektrisch mit dem Gleichstrom-Ausgangsanschluss (4) gekoppelt ist; und
eine zweite Stromsteuerkomponente (5b) mit einer Eingangsklemme (51b), die über eine zweite Spannungsausgangs-Einstelleinheit (6b) elektrisch mit dem zweiten Eingangsanschluss (3b) gekoppelt ist, und einer Ausgangsklemme (52b), die elektrisch mit dem Gleichstrom-Ausgangsanschluss (4) gekoppelt ist,
wobei:
wenn eine in die erste Stromsteuerkomponente (5a) eingegebene und der ersten Stromquelle zugeordnete Spannung um eine vorbestimmte Differenz größer ist als eine in die zweite Stromsteuerkomponente (5b) eingegebene und
der zweiten Stromquelle zugeordnete Spannung, unterbricht die zweite Stromsteuerkomponente (5b) einen Strompfad von dem zweiten Gleichstrom-Eingangsanschluss (3b) zu dem Gleichstrom-Ausgangsanschluss (4), und die erste Stromsteuerkomponente (5a) stellt einen Strompfad von dem ersten Gleichstrom-Eingangsanschluss (3a) zu dem Gleichstrom-Ausgangsanschluss (4) her;
wenn der Absolutwert einer Differenz zwischen der in die erste Stromsteuerkomponente (5a) eingegebenen und der ersten Stromquelle zugeordneten Spannung und der in die zweite Stromsteuerkomponente (5b) eingegebenen und der zweiten Stromquelle zugeordneten Spannung kleiner als die vorbestimmte Differenz ist, stellt die zweite Stromsteuerkomponente (5b) den Strompfad von dem zweiten Gleichstrom-Eingangsanschluss (3b) zu dem Gleichstrom-Ausgangsanschluss (4) her, und stellt die erste Stromsteuerkomponente (5a) den Strompfad von dem ersten Gleichstrom-Eingangsanschluss (3a) zu dem Gleichstrom-Ausgangsanschluss (4) her;
und,
wenn die in die zweite Stromsteuerkomponente (5b) eingegebene und der zweiten Stromquelle zugeordnete Spannung um die vorbestimmte Differenz größer ist als die in die erste Stromsteuerkomponente (5a) eingegebene und der ersten Stromquelle zugeordnete Spannung, stellt die zweite Stromsteuerkomponente (5b) den Strompfad von dem zweiten Gleichstrom-Eingangsanschluss (3b) zu dem Gleichstrom-Ausgangsanschluss (4) her, und unterbricht die erste Stromsteuerkomponente (5a) den Strompfad von dem ersten Gleichstrom-Eingangsanschluss (3a) zu dem Gleichstrom-Ausgangsanschluss (4);
wobei die Stromversorgungsvorrichtung **dadurch gekennzeichnet ist, dass** die erste Spannungseinstelleinheit (6a) einen Arbeitszustand, in dem sie eine Spannung ausgibt, die im Bereich einer Betriebsspannung der Last (2) liegt, und einen Nicht-Arbeitszustand hat, in dem sie eine Spannung ausgibt, die mit ihrer Eingangsspannung variiert, wobei eine erste Prioritätseinstelleinheit (7a) dazu ausgelegt ist, die erste Spannungseinstelleinheit (6a) zu steuern, um zwischen dem Arbeitszustand und dem Nicht-Arbeitszustand zu schalten;
wobei die zweite Spannungseinstelleinheit (6b) einen Arbeitszustand, in dem sie eine Spannung ausgibt, die im Bereich einer Betriebsspannung der Last (2) liegt, und einen Nicht-Arbeitszustand hat, in dem sie eine Spannung ausgibt, die mit ihrer Eingangsspannung variiert, wobei eine zweite Prioritätseinstelleinheit (7b) dazu ausgelegt ist, die zweite Spannungseinstelleinheit (6b) zu steuern, um zwischen dem Arbeitszustand und dem Nicht-Arbeitszustand zu schalten.

2. Stromversorgungsvorrichtung nach Anspruch 1, **dadurch gekennzeichnet, dass** sowohl die erste Stromsteuerkomponente (5a) als auch die zweite Stromsteuerkomponente (5b) eine Diode ist.

3. Stromversorgungsvorrichtung nach Anspruch 1, **dadurch gekennzeichnet, dass** sowohl die erste Stromsteuerkomponente (5a) als auch die zweite Stromsteuerkomponente (5b) ein Thyristor ist.

4. Stromversorgungsvorrichtung nach Anspruch 3, **dadurch gekennzeichnet, dass** der Thyristor ein siliziumgesteuerter Gleichrichter ist.

5. Stromversorgungsvorrichtung nach Anspruch 3, **dadurch gekennzeichnet, dass** der Thyristor ein Triac ist.

6. Stromversorgungsvorrichtung nach einem der Ansprüche 1 bis 5, **dadurch gekennzeichnet, dass** die erste Stromquelle eine höhere Priorität als die zweite Stromquelle hat, und die zweite Prioritätseinstelleinheit (7b) dazu ausgelegt ist, die zweite Spannungseinstelleinheit (6b) so zu steuern, dass die von der zweiten Spannungseinstelleinheit (6b) ausgegebene Spannung niedriger als eine Spitzenspannung der von der ersten Spannungseinstelleinheit (6a) ausgegebenen Spannung ist.

7. Stromversorgungsvorrichtung nach Anspruch 6, **dadurch gekennzeichnet, dass** die erste Stromquelle ein mit Solarenergie betriebener Stromgenerator (11) ist und die zweite Stromquelle ein mit handelsüblichem Wechselstrom betriebener Stromrichter (12) ist.

8. Stromversorgungsvorrichtung nach einem der Ansprüche 1 bis 7, ferner **gekennzeichnet durch** wenigstens eine Speichereinheit (8a, 8b), die jeweils mit der Eingangsklemme (51a, 51b) einer entsprechenden der ersten Stromsteuerkomponente (5a) und der zweiten Stromsteuerkomponente (5b) gekoppelt ist.

9. Stromversorgungsvorrichtung nach Anspruch 8, **dadurch gekennzeichnet, dass** die Speichereinheit (8a, 8b) ein Kondensator ist.

10. Stromversorgungsvorrichtung nach einem der vorhergehenden Ansprüche, wobei die Stromversorgungsvorrichtung für die Verwendung mit der ersten Stromquelle, der zweiten Stromquelle und einer dritten Stromquelle ausgelegt ist, wobei die Stromversorgungsvorrichtung einschließt:
einen dritten Gleichstrom-Eingangsanschluss (3c) für den elektrischen Anschluss an die dritte Stromquelle;
eine dritte Stromsteuerkomponente (5c) mit einer Eingangsklemme (51c), die über eine dritte Spannungseinstelleinheit (6c) elektrisch mit dem dritten Gleichstrom-Eingangsanschluss (3c) gekoppelt ist, und eine Ausgangsklemme (52c), die elektrisch mit dem Gleichstrom-Ausgangsanschluss (4) gekoppelt ist;
wobei die dritte Spannungseinstelleinheit (6c) einen Arbeitszustand, in dem sie eine Spannung ausgibt, die im Bereich einer Betriebsspannung der Last (2) liegt, und einen Nicht-Arbeitszustand hat, in dem sie eine Spannung ausgibt, die mit ihrer Eingangsspannung variiert, wobei eine dritte Prioritätseinstelleinheit (7c) dazu ausgelegt ist, die dritte Spannungseinstelleinheit (6c) so zu steuern, dass sie zwischen dem Arbeitszustand und dem Nicht-Arbeitszustand schaltet, wobei die erste, zweite und dritte Stromsteuerkomponente (5a, 5b, 5c) parallel mit dem Gleichstrom-Ausgangsanschluss (4) gekoppelt sind;
wobei:
wenn eine in die erste Stromsteuerkomponente (5a) eingegebene und der ersten Stromquelle zugeordnete Spannung um eine erste vorbestimmte Differenz größer ist als eine in die zweite Stromsteuerkomponente (5b) eingegebene und der zweiten Stromquelle zugeordnete Spannung, und um eine zweite vorbestimmte Differenz größer ist als eine in die dritte Stromsteuerkomponente (5c) eingegebene und der dritten Stromquelle zugeordnete Spannung, unterbricht die zweite Stromsteuerkomponente (5b) einen Strompfad von dem zweiten Gleichstrom-Eingangsanschluss (3b) zu dem Gleichstrom-Ausgangsanschluss (4), die dritte Stromsteuerkomponente (5c) unterbricht einen Strompfad von dem dritten Gleichstrom-Eingangsanschluss (3c) zu dem Gleichstrom-Ausgangsanschluss (4), und die erste Stromsteuerkomponente (5a) stellt einen Strompfad vom ersten Gleichstrom-Eingangsanschluss (3a) zum Gleichstrom-Ausgangsanschluss (4) her;
wenn der Absolutwert einer Differenz zwischen der in die erste Stromsteuerkomponente (5a) eingegebenen und der ersten Stromquelle zugeordneten Spannung und der in die zweite Stromsteuerkomponente (5b) eingegebenen und der zweiten Stromquelle zugeordneten Spannung kleiner als die erste vorbestimmte Differenz ist, und die in die erste Stromsteuerkomponente (5a) eingegebene und der ersten Stromquelle zugeordnete Spannung um die zweite vorbestimmte Differenz größer ist als die in die dritte Stromsteuerkomponente (5c) eingegebene und der dritten Stromquelle zugeordnete Spannung, stellt die zweite Stromsteuerkomponente (5b) den Strompfad von dem zweiten Gleichstrom-Eingangsanschluss (3b) zu dem Gleichstrom-Ausgangsanschluss (4) her, die dritte Stromsteuerkomponente (5c) unterbricht den Strompfad von dem dritten Gleichstrom-Eingangsanschluss (3c) zu dem Gleichstrom-Ausgangsanschluss (4), und die erste Stromsteuerkomponente (5a) stellt den Strompfad von dem ersten Gleichstrom-Eingangsanschluss (3a) zu dem Gleichstrom-Ausgangsanschluss (4) her;
wenn die in die zweite Stromsteuerkomponente (5b) eingegebene und der zweiten Stromquelle zugeordnete Spannung um die erste vorbestimmte Differenz größer ist als die in die erste Stromsteuerkomponente (5a) eingegebene und der ersten Stromquelle zugeordnete Spannung, und die in die zweite Stromsteuerkomponente (5b) eingegebene und der zweiten Stromquelle zugeordnete Spannung um die zweite vorbestimmte Differenz größer ist als die in die dritte Stromsteuerkomponente (5c) eingegebene und der dritten Stromquelle zugeordnete Spannung, stellt die zweite Stromsteuerkomponente (5b) den Strompfad von dem zweiten Gleichstrom-Eingangsanschluss (3b) zu dem Gleichstrom-Ausgangsanschluss (4) her, unterbricht die dritte Stromsteuerkomponente (5c) den Strompfad von dem dritten Gleichstrom-Eingangsanschluss (3c) zu dem Gleichstrom-Ausgangsanschluss (4) und unterbricht die erste Stromsteuerkomponente (5a) den Strompfad von dem ersten Gleichstrom-Eingangsanschluss (3a) zu dem Gleichstrom-Ausgangsanschluss (4);
wenn die in die zweite Stromsteuerkomponente (5b) eingegebene und der zweiten Stromquelle zugeordnete Spannung um die erste vorbestimmte Differenz größer ist als die in die erste Stromsteuerkomponente (5a) eingegebene und der ersten Stromquelle zugeordnete Spannung, und der Absolutwert einer Differenz zwischen der in die zweite Stromsteuerkomponente (5b) eingegebenen und der zweiten Stromquelle zugeordneten Spannung und der in die dritte Stromsteuerkomponente (5c) eingegebenen und der dritten Stromquelle zugeordneten Spannung kleiner als die zweite vorbestimmte Differenz ist, stellt die zweite Stromsteuerkomponente (5b) den Strompfad vom zweiten Gleichstrom-Eingangsanschluss (3b) zu dem Gleichstrom-Ausgangsanschluss (4) her, die dritte Stromsteuerkomponente (5c) stellt den Strompfad von dem dritten Gleichstrom-Eingangsanschluss (3c) zu dem Gleichstrom-Ausgangsanschluss (4) her und die erste Stromsteuerkomponente (5a) unterbricht den Strompfad von dem ersten Gleichstrom-Eingangsanschluss (3a) zu dem Gleichstrom-Ausgangsanschluss (4); und
wenn die in die dritte Stromsteuerkomponente (5c) eingegebene und der dritten Stromquelle zugeordnete Spannung um die erste vorbestimmte Differenz größer ist als die in die erste Stromsteuerkomponente (5a) eingegebene und der ersten Stromquelle zugeordnete Spannung und um die zweite vorbestimmte Differenz größer ist als die in die zweite Stromsteuerkomponente (5b) eingegebene und der zweiten Stromquelle zugeordnete Spannung, unterbricht die zweite Stromsteuerkomponente (5b) den Strompfad vom zweiten Gleichstrom-Eingangsanschluss (3b) zu dem Gleichstrom-Ausgangsanschluss (4), die dritte Stromsteuerkomponente (5c) stellt den Strompfad von dem dritten Gleichstrom-Eingangsanschluss (3c) zu dem Gleichstrom-Ausgangsanschluss (4) her und die erste Stromsteuerkomponente (5a) unterbricht den Strompfad von dem ersten Gleichstrom-Eingangsanschluss (3a) zu dem Gleichstrom-Ausgangsanschluss (4).

11. Stromversorgungsvorrichtung nach Anspruch 10, **dadurch gekennzeichnet, dass** die erste Stromquelle eine höhere Priorität als die zweite Stromquelle hat, die zweite Stromquelle eine höhere Priorität als die dritte Stromquelle hat, die dritte Prioritätseinstelleinheit (7c) dazu ausgelegt ist, die dritte Spannungseinstelleinheit (6c) so zu steuern, dass die von der dritten Spannungseinstelleinheit (6c) ausgegebene Spannung niedriger als eine Spitzenspannung der von der zweiten Spannungseinstelleinheit (6b) ausgegebenen Spannung ist, und die zweite Prioritätseinstelleinheit (7b) dazu ausgelegt ist, die zweite Spannungseinstelleinheit (6b) so zu steuern, dass die von der zweiten Spannungseinstelleinheit (6b) ausgegebene Spannung niedriger als eine Spitzenspannung der von der ersten Spannungseinstelleinheit (6a) ausgegebenen Spannung ist.

12. Stromversorgungsvorrichtung nach Anspruch 11, **dadurch gekennzeichnet, dass**:
die erste Stromquelle ein mit Solarenergie betriebener Stromgenerator (11) ist;
die zweite Stromquelle ein Stromgenerator (11) ist, der von einer nachhaltigen Energiequelle betrieben wird, die aus Windenergie, geothermischer Energie, Gezeitenenergie und Biokraftstoff ausgewählt ist; und
die dritte Stromquelle ein Stromrichter (12) ist, der mit handelsüblichem Wechselstrom betrieben wird.

## Revendications

1. Appareil de fourniture d'énergie conçu pour être utilisé avec une première source d'électricité et une deuxième source d'électricité, et conçu pour fournir de l'énergie électrique à une charge (2), l'appareil de fourniture d'énergie comprenant :
un premier port d'entrée CC (3a) destiné à la liaison électrique avec la première source d'électricité ;
un deuxième port d'entrée CC (3b) destiné à la liaison électrique avec la deuxième source d'électricité ;
un port de sortie CC (4) destiné à la liaison électrique avec la charge (2) ;
un premier composant de régulation de courant (5a) ayant une borne d'entrée (51a) couplée électriquement au premier port d'entrée (3a) par l'intermédiaire d'une première unité de réglage de tension (6a), et une borne de sortie (52a) couplée électriquement au port de sortie CC (4) ; et
un deuxième composant de régulation de courant (5b) ayant une borne d'entrée (51b) couplée électriquement au deuxième port d'entrée (3b) par l'intermédiaire d'une deuxième unité de réglage de tension de sortie (6b), et une borne de sortie (52b) couplée électriquement au port de sortie CC (4) ;
dans lequel :
lorsqu'une tension délivrée en entrée au premier composant de régulation de courant (5a) et associée à la première source d'électricité est supérieure à une tension délivrée en entrée au deuxième composant de régulation de courant (5b) et associée à la deuxième source d'électricité selon une différence prédéterminée, le deuxième composant de régulation de courant (5b) interrompt un chemin de courant entre le deuxième port d'entrée CC (3b) et le port de sortie CC (4), et le premier composant de régulation de courant (5a) établit un chemin de courant entre le premier port d'entrée CC (3a) et le port de sortie CC (4) ;
lorsqu'une valeur absolue d'une différence entre la tension délivrée en entrée au premier composant de régulation de courant (5a) et associée à la première source d'électricité et la tension délivrée en entrée au deuxième composant de régulation de courant (5b) et associée à la deuxième source d'électricité est inférieure à la différence prédéterminée, le deuxième composant de régulation de courant (5b) établit le chemin de courant entre le deuxième port d'entrée CC (3b) et le port de sortie CC (4), et le premier composant de régulation de courant (5a) établit le chemin de courant entre le premier port d'entrée CC (3a) et le port de sortie CC (4) ; et
lorsque la tension délivrée en entrée au deuxième composant de régulation de courant (5b) et associée à la deuxième source d'électricité est supérieure à la tension délivrée en entrée au premier composant de régulation de courant (5a) et associée à la première source d'électricité selon la différence prédéterminée, le deuxième composant de régulation de courant (5b) établit le chemin de courant entre le deuxième port d'entrée CC (3b) et le port de sortie CC (4), et le premier composant de régulation de courant (5a) interrompt le chemin de courant entre le premier port d'entrée CC (3a) et le port de sortie CC (4) ;
l'appareil de fourniture d'énergie étant **caractérisé en ce que**
la première unité de réglage de tension (6a) a un état de fonctionnement, dans lequel elle délivre en sortie une tension qui est aux alentours d'une tension de fonctionnement de la charge (2), et un état de non fonctionnement, dans lequel elle délivre en sortie une tension qui varie en fonction de sa tension d'entrée, dans lequel la première unité de définition de priorité (7a) est conçue pour commander la première unité de réglage de tension (6a) pour passer de l'état de fonctionnement à l'état de non fonctionnement ;
dans lequel la deuxième unité de réglage de tension (6b) a un état de fonctionnement, dans lequel elle délivre en sortie une tension qui est aux alentours d'une tension de fonctionnement de la charge (2), et un état de non fonctionnement, dans lequel elle délivre en sortie une tension qui varie en fonction de sa tension d'entrée, dans lequel une deuxième unité de définition de priorité (7b) est conçue pour commander la deuxième unité de réglage de tension (6b) pour passer de l'état de fonctionnement à l'état de non fonctionnement.

2. Appareil de fourniture d'énergie selon la revendication 1, **caractérisé en ce que** chacun parmi le premier composant de régulation de courant (5a) et le deuxième composant de régulation de courant (5b) est une diode.

3. Appareil de fourniture d'énergie selon la revendication 1, **caractérisé en ce que** chacun parmi le premier composant de régulation de courant (5a) et le deuxième composant de régulation de courant (5b) est un thyristor.

4. Appareil de fourniture d'énergie selon la revendication 3, **caractérisé en ce que** le thyristor est un redresseur commandé au silicium.

5. Appareil de fourniture d'énergie selon la revendication 3, **caractérisé en ce que** le thyristor est un triac.

6. Appareil de fourniture d'énergie selon l'une quelconque des revendications 1 à 5, **caractérisé en ce que** la première source d'électricité a une priorité supérieure à celle de la deuxième source d'électricité, et la deuxième unité de définition de priorité (7b) est conçue pour commander la deuxième unité de réglage de tension (6b) de sorte que la tension délivrée en sortie par la deuxième unité de réglage de tension (6b) est inférieure à une tension de crête de la tension délivrée en sortie par la première unité de réglage de tension (6a).

7. Appareil de fourniture d'énergie selon la revendication 6, **caractérisé en ce que** la première source d'électricité est un générateur d'électricité (11) alimenté par l'énergie solaire, et la deuxième source d'électricité est un convertisseur d'énergie (12) alimenté par une alimentation en courant alternatif commercial.

8. Appareil de fourniture d'énergie selon l'une quelconque des revendications 1 à 7, **caractérisé en outre par** au moins une unité de stockage (8a, 8b), chacune étant couplée à la borne d'entrée (51a, 51b) d'un composant correspondant parmi le premier composant de régulation de courant (5a) et le deuxième composant de régulation de courant (5b).

9. Appareil de fourniture d'énergie selon la revendication 8, **caractérisé en ce que** l'unité de stockage (8a, 8b) est un condensateur.

10. Appareil de fourniture d'énergie selon l'une quelconque des revendications précédentes, l'appareil de fourniture d'énergie étant conçu pour être utilisé avec la première source d'électricité, la deuxième source d'électricité et une troisième source d'électricité, l'appareil de fourniture d'énergie comprenant :
un troisième port d'entrée CC (3c) destiné à la liaison électrique avec la troisième source d'électricité ;
un troisième composant de régulation de courant (5c) ayant une borne d'entrée (51c) couplée électriquement au troisième port d'entrée CC (3c) par l'intermédiaire d'une troisième unité de réglage de tension (6c), et une borne de sortie (52c) couplée électriquement au port de sortie CC (4) ;
dans lequel la troisième unité de réglage de tension (6c) a un état de fonctionnement, dans lequel elle délivre en sortie une tension qui est aux alentours d'une tension de fonctionnement de la charge (2), et un état de non fonctionnement, dans lequel elle délivre en sortie une tension qui varie en fonction de sa tension d'entrée, dans lequel une troisième unité de définition de priorité (7c) est conçue pour commander la troisième unité de réglage de tension (6c) pour passer de l'état de fonctionnement à l'état de non fonctionnement, dans lequel, les premier, deuxième et troisième composants de régulation de courant (5a, 5b, 5c) sont couplés en parallèle au port de sortie CC (4) ;
dans lequel :
lorsqu'une tension délivrée en entrée au premier composant de régulation de courant (5a) et associée à la première source d'électricité est supérieure à une tension délivrée en entrée au deuxième composant de régulation de courant (5b) et associée à la deuxième source d'électricité selon une première différence prédéterminée, et est supérieure à une tension délivrée en entrée au troisième composant de régulation de courant (5c) et associée à la troisième source d'électricité par une deuxième différence prédéterminée, le deuxième composant de régulation de courant (5b) interrompt un chemin de courant entre le deuxième port d'entrée CC (3b) et le port de sortie CC (4), le troisième composant de régulation de courant (5c) interrompt un chemin de courant entre le troisième port d'entrée CC (3c) et le port de sortie CC (4), et le premier composant de régulation de courant (5a) établit un chemin de courant entre le premier port d'entrée CC (3a) et le port de sortie CC (4) ;
lorsqu'une valeur absolue d'une différence entre la tension délivrée en entrée au premier composant de régulation de courant (5a) et associée à la première source d'électricité et la tension délivrée en entrée au deuxième composant de régulation de courant (5b) et associée à la deuxième source d'électricité est inférieure à la première différence prédéterminée, et la tension délivrée en entrée au premier composant de régulation de courant (5a) et associée à la première source d'électricité est supérieure à la tension délivrée en entrée au troisième composant de régulation de courant (5c) et associée à la troisième source d'électricité selon la deuxième différence prédéterminée, le deuxième composant de régulation de courant (5b) établit le chemin de courant entre le deuxième port d'entrée CC (3b) et le port de sortie CC (4), le troisième composant de régulation de courant (5c) interrompt le chemin de courant entre le troisième port d'entrée CC (3c) et le port de sortie CC (4), et le premier composant de régulation de courant (5a) établit le chemin de courant entre le premier port d'entrée CC (3a) et le port de sortie CC (4) ;
lorsque la tension délivrée en entrée au deuxième composant de régulation de courant (5b) et associée à la deuxième source d'électricité est supérieure à la tension délivrée en entrée au premier composant de régulation de courant (5a) et associée à la première source d'électricité selon la première différence prédéterminée, et la tension délivrée en entrée au deuxième composant de régulation de courant (5b) et associée à la deuxième source d'électricité est supérieure à la tension délivrée en entrée au troisième composant de régulation de courant (5c) et associée à la troisième source d'électricité selon la deuxième différence prédéterminée, le deuxième composant de régulation de courant (5b) établit le chemin de courant entre le deuxième port d'entrée CC (3b) et le port de sortie CC (4), le troisième composant de régulation de courant (5c) interrompt le chemin de courant entre le troisième port d'entrée CC (3c) et le port de sortie CC (4), et le premier composant de régulation de courant (5a) interrompt le chemin de courant entre le premier port d'entrée CC (3a) et le port de sortie CC (4) ;
lorsque la tension délivrée en entrée au deuxième composant de régulation de courant (5b) et associée à la deuxième source d'électricité est supérieure à la tension délivrée en entrée au premier composant de régulation de courant (5a) et associée à la première source d'électricité selon la première différence prédéterminée, et une valeur absolue d'une différence entre la tension délivrée en entrée au deuxième composant de régulation de courant (5b) et associée à la deuxième source d'électricité et la tension délivrée en entrée au troisième composant de régulation de courant (5c) et associée à la troisième source d'électricité est inférieure à la deuxième différence prédéterminée, le deuxième composant de régulation de courant (5b) établit le chemin de courant entre le deuxième port d'entrée CC (3b) et le port de sortie CC (4), le troisième composant de régulation de courant (5c) établit le chemin de courant entre le troisième port d'entrée CC (3c) et le port de sortie CC (4), et le premier composant de régulation de courant (5a) interrompt le chemin de courant entre le premier port d'entrée CC (3a) et le port de sortie CC (4) ; et
lorsque la tension délivrée en entrée au troisième composant de régulation de courant (5c) et associée à la troisième source d'électricité est supérieure à la tension délivrée en entrée au premier composant de régulation de courant (5a) et associée à la première source d'électricité selon la première différence prédéterminée, et est supérieure à la tension délivrée en entrée au deuxième composant de régulation de courant (5b) et associée à la deuxième source d'électricité selon la deuxième différence prédéterminée, le deuxième composant de régulation de courant (5b) interrompt le chemin de courant entre le deuxième port d'entrée CC (3b) et le port de sortie CC (4), le troisième composant de régulation de courant (5c) établit le chemin de courant entre le troisième port d'entrée CC (3c) et le port de sortie CC (4), et le premier composant de régulation de courant (5a) interrompt le chemin de courant entre le premier port d'entrée CC (3a) et le port de sortie CC (4).

11. Appareil de fourniture d'énergie selon la revendication 10, **caractérisé en ce que** la première source d'électricité a une priorité supérieure à celle de la deuxième source d'électricité, la deuxième source d'électricité a une priorité supérieure à celle de la troisième source d'électricité, la troisième unité de définition de priorité (7c) est conçue pour commander la troisième unité de réglage de tension (6c) de sorte que la tension délivrée en sortie par la troisième unité de réglage de tension (6c) est inférieure à une tension de crête de la tension délivrée en sortie par la deuxième unité de réglage de tension (6b), et la deuxième unité de définition de priorité (7b) est conçue pour commander la deuxième unité de réglage de tension (6b) de sorte que la tension délivrée en sortie par la deuxième unité de réglage de tension (6b) est inférieure à une tension de crête de la tension délivrée en sortie par la première unité de réglage de tension (6a).

12. Appareil de fourniture d'énergie selon la revendication 11, **caractérisé en ce que** :
la première source d'électricité est un générateur d'électricité (11) alimenté par l'énergie solaire ;
la deuxième source d'électricité est un générateur d'électricité (11) alimenté par une source d'énergie durable choisie parmi l'énergie éolienne, l'énergie géothermique, l'énergie marémotrice et le biocarburant ; et
la troisième source d'électricité est un convertisseur d'énergie (12) alimenté par une alimentation en courant alternatif commercial.
